# EUROPÄISCHE PATENTSCHRIFT

(11) **EP 1 377 095 B1**
(45) Veröffentlichungstag und Bekanntmachung des Hinweises auf die Patenterteilung: **20.04.2011**
(21) Anmeldenummer: 02014328.5
(22) Anmeldetag: 27.06.2002
(51) Int. Cl.: H04W 36/14

(54) **Verfahren und Funkkommunikationssystem für Inter System Handover**
Method and Radio Communication System for Inter System Handover
Procédé et système de radiocommunication pour transfert inter-système

(43) Veröffentlichungstag der Anmeldung: 02.01.2004
(73) Patentinhaber: SIEMENS AKTIENGESELLSCHAFT, 80333 München (DE)
(72) Erfinder: Lott, Matthias, 81477 München (DE); Schulz, Egon, Dr., 80993 München (DE); Siebert, Matthias, 52072 Aachen (DE); Weckerle, Martin, 85598 Baldham (DE)

(56) Entgegenhaltungen:
- DE-A- 10 016 622
- DE-A- 19 957 642
- FR-A- 2 729 812
- US-B1- 6 240 292

## Beschreibung

Funkkommunikationssysteme dienen der Übertragung von Informationen, Sprache oder Daten, mit Hilfe von elektromagnetischen Wellen über eine Funkschnittstelle zwischen einer sendenden und einer empfangenden Funkstation. Verschiedene Teilnehmer werden dabei durch unterschiedliche physikalische Kanäle, in die die Funkschnittstelle organisiert ist, unterschieden. Abhängig von dem verwendeten Zugriffsverfahren kann ein physikalischer Kanal durch einen schmalbandigen Frequenzbereich, einen Zeitschlitz und/oder einen Spreizcode gebildet werden. Die derzeit untersuchten und aussichtsreichsten Kandidaten für zellulare Mobilfunksysteme auf Basis von GSM, GPRS, EDGE und UMTS, sowie drahtlose lokale Netze (Wireless Local Area Networks WLANs) wie zum Beispiel IEEE802.11 und HIPERLAN/2 und Satellitensysteme und Verteildienstsysteme (Broadcastsysteme), wie zum Beispiel Satellite-UMTS (UMTS-S), DAB und DVB-S/T unterscheiden sich unter anderem durch das angewandte Zugriffsverfahren. Das Zugriffsverfahren beeinflusst die Eigenschaften der Datenübertragung, wie zum Beispiel Datenrate und Reichweite.

In zukünftigen Mobilfunksystemen ist davon auszugehen, dass verschiedene Zugriffsverfahren parallel angewandt werden, um jedem Mobilfunkteilnehmer für die von ihm gewünschte Datenübertragung optimale Übertragungseigenschaften bereitstellen zu können.

Ein gemeinsames Merkmal der oben aufgeführten Mobilfunksysteme ist, dass sie Zugangspunkt aufweisen, von denen über die Funkschnittstelle eine Funkverbindung zu mobilen Funkstationen aufgebaut werden kann. Diese Zugangspunkte, die als Sende/Empfangseinheiten ausgebildet sind, werden bei GSM, GPRS, EDGE als Basisstationen, bei UMTS als NodeB und in drahtlosen lokalen Netzen als Zugangspunkt beziehungsweise Access Point bezeichnet. In zellularen Mobilfunksystemen sind mehrere Zugangspunkte mit einer Funknetzsteuerung verbunden, die die Verwaltung der funktechnischen Ressourcen der angeschlossenen festen Funkstationen vornimmt. Die Funknetzsteuerung wird bei GSM, GPRS und EDGE als Basisstationssteuerung, bei UMTS als Radio Network Controller RNC und in WLAN nach dem Standard HIPERLAN/2 als Zugangspunktsteuerung (Access Point Controler). In der Regel existieren in WLAN keine Funknetzsteuerungen, welche die Verwaltung der Funkressourcen vornimmt. Nach dem Standard 8021.11 suchen sich die Zugangspunkte selbständig eine freie Frequenz und nutzen diese für die Datenkommunikation. Die Funkzugangssteuerung in zellularen Mobilfunksystemen ist mit einem Vermittlungsknoten verbunden, der bei GSM, GPRS, EDGE und UMTS als Mobilvermittlungsstelle bezeichnet wird. Die Vermittlungsknoten sind untereinander vernetzt und sind Teil des Festnetzes. Zugangspunkte eines WLAN sind in der Regel direkt mit dem Festnetz verbunden. Bei dem Festnetz kann es sich auch um das Internet oder ein drahtgebundenes Zugangsnetz handeln, welches über ein entsprechendes Gateway einen Zugang zum Internet realisiert.

Ein Gebiet, das von einem Funkkommunikationssystem abgedeckt wird, wird in einzelne Funkzonen, die auch als Zellen bezeichnet werden, aufgeteilt. Eine Zelle wird dabei von einem der Zugangspunkte bedient, über die Funkverbindungen von mobilen Funkstationen, die sich in dieser Zelle aufhalten, aufgebaut werden. Unterschiedlichen Funkverbindungen werden dabei unterschiedliche physikalische Kanäle zugewiesen.

Bewegt sich eine mobile Funkstation aus dem Gebiet einer Zelle in das einer anderen Zelle, so muss bei laufender Funkverbindung eine Übergabeprozedur (auch Handover oder Handoff genannt) erfolgen, bei der die aktive Funkverbindung von einem Zugangspunkt zu einem anderen Zugangspunkt übergeben wird, wobei die Funkverbindung auch über die Zellgrenzen hinweg aufrechterhalten wird.

Vielfach werden Funkzellen unterschiedlicher Größe definiert, die sich überlagern. Mit Hilfe dieser Funkzellen kann den unterschiedlichen Anforderungen an die Mobilität der Teilnehmer entsprochen werden. Teilnehmer, die sich mit geringer Geschwindigkeit bewegen, werden vorzugsweise kleinen Zellen zugeordnet, während Teilnehmer, die sich mit hoher Geschwindigkeit bewegen, vorzugsweise großen Zellen zugeordnet werden, um häufige Übergabeprozeduren zu vermeiden. Bei einer Änderung des Bewegungsverhaltens eines Teilnehmers kann eine Übergabeprozedur von einer kleinen zu einer großen Zelle notwendig werden.

Darüber hinaus können in einem Mobilfunksystem, das gleichzeitig unterschiedliche Zugriffsverfahren anbietet, Übergabeprozeduren zwischen Zellen, die unterschiedliche Zugriffsverfahren unterstützen, erforderlich werden, wenn die Anforderungen einer Teilnehmerverbindung, zum Beispiel bezüglich Datenrate oder Geschwindigkeit des Teilnehmers, sich ändern.

Die Entscheidung, dass ein Zellenwechsel erfolgen soll, wird in dem Mobilfunksystem auf Grund unterschiedlicher Kriterien getroffen. Neben der Empfangsfeldstärke (Received Signal Strength Indicator, RSSI), der Bitfehlerrate (Bit Error Rate, BER) oder dem Signal-zu-Störverhältnis (Carrier-to-Interference Ratio, C/I) kann der Abstand der mobilen Funkstation zur festen Funkstation als Kriterium für die Einleitung einer Übergabeprozedur herangezogen werden. In F. Cortés-Rodriguez et al, Proc. IEEE VTC'99, 1999, pp. 775-779 ist vorgeschlagen worden, die Position der mobilen Funkstation als Bedingung für eine Übergabeprozedurentscheidung zu verwenden. Diese Kriterien können unterschiedlich gewichtet und kombiniert werden und darüber hinaus mit Hysteresen versehen werden, um unnötig häufige Zellenwechsel zu vermeiden.

Zur Entscheidung, in welche Zelle ein Wechsel erfolgen soll, ist es erforderlich, Informationen über die Verbindungsqualität in der neuen Zelle zu erhalten. Das heisst, die RSSI-, BER- und/oder C/I-Werte für eine Funkstation in der neuen Zelle müssen gemessen werden. Unabhängig davon ob die neue Zelle dasselbe Zugriffsverfahren unterstützt wie die alte, muss sich der Empfänger der Funkstation dazu auf die Funkressourcen der neuen Zelle einstellen und Signale messen, die gewöhnlich von der Basisstation oder dem Zugangspunkt periodisch ausgesendet werden. Verwendet die neue Zelle eine andere Frequenz, so muss der Empfänger die Frequenz wechseln. Wird in der anderen Zelle ein anderer Scrambling-Code verwendet, so muss dieser Code bei der Decodierung entsprechend im Empfänger verwendet werden.

In dem UMTS-Standard sind drei verschiedene Verfahren für die Messungen in Systemen mit demselben beziehungsweise unterschiedlichen Zugriffsverfahren vorgesehen (siehe 3GPP TS25.212: "Multiplexing and channel coding (FDD)", 3GPP TS25.215: "Physical layer - Measurements (FDD)", 3GPP TS 25.331: "RRC Protocol Specification"). Dabei werden sogenannte Intra Frequency Messungen, das heisst, Messungen, bei denen in beiden Zellen der gleiche Mode FDD oder TDD angewandt wird, Interfrequency Intra-System, das heisst, Messungen, bei denen die eine Zelle im FDD-Mode und die andere Zelle im TDD-Mode betrieben wird, und Interfrequency Intersystem Messungen, das heisst, Messungen, bei denen die eine Zelle gemäß UMTS-Standard und die andere Zelle gemäß GSM-Standard betrieben wird, unterschieden. Die Messungen können im FDD-Mode durch den Compressed-Mode und im TDD-Mode während der Zeit ungenutzter Zeitschlitze durchgeführt werden.

Die Messungen werden von der mobilen Funkstation durchgeführt. Den Befehl dazu erhält die mobile Funkstation von der festen Funkstation, mit der sie die Verbindung aufgebaut hat, durch eine entsprechende Steuernachricht, die sogenannte "Measurement Control Message". Diese Nachricht enthält die Information, was gemessen werden soll und, ob die Messung periodisch oder ereignisgesteuert durchgeführt werden soll, das heisst, eine Mess-ID und einen Mess-Typ.

Zur Vorbereitung einer Übergabeprozedur wird der mobilen Funkstation vom Netz eine Liste von Zellen übermittelt, in denen die mobile Funkstation Messungen während der ungenutzten Zeitschlitze durchführen soll. Die Zellen können zum Beispiel im TDD-Mode, FDD-Mode oder gemäß GSM-Standard betrieben werden. Zu Beginn einer Messung muss die mobile Funkstation sich in der Regel zunächst in der Zelle synchronisieren. Die mobile Funkstation misst dann die Empfangsfeldstärke über eine Messperiode, die für Intrafrequency-Messungen 200 ms und für Messungen im GSM-System sowie für Interfrequency-Messungen 480 ms beträgt. Im FDD-Mode wird eine Mittelung der Messwerte über drei Messperioden vorgenommen.

Für drahtlose lokale Netze, zum Beispiel HIPERLAN/2 sind ähnliche Messprozeduren vorgeschlagen worden (siehe zum Beispiel ETSI/BRAN "Broadband Radio Access Networks (BRANs); HIPERLAN Type 2; Data Link Control (DLC) Layer, Radio Link Control (RLC) Sublayer", Draft DTR/BRAN-0020004-23, ETSI Sophia Antipolis, France, Feb. 2000; ETSI/BRAN "Broadband Radio Access Networks (BRAN); HIPERLAN Type 2; Physical (PHY) layer", Draft DTR/BRAN-0023003, ETSI Sophia Antipolis, France, März 2000; ETSI/BRAN "Broadband Radio Access Networks (BRAN); HIPERLAN Type 2 Functional Specification Data Link Control (DLC) Layer, Part 4 - Extension for Home Environments", Draft DTR/BRAN-0020004-4, ETSI, Sophia Antipolis, France, April 2000). Zum Aufbau einer Verbindung zu einer zentralen Instanz muss während einer minimalen Zeit von 4 ms eine Frequenz abgehorcht werden. Während dieser Zeit soll der Broadcast Control Channel (BCCH), welcher auf dem Broadcast Channel (BCH) übertragen wird, dekodiert werden. Ausserdem werden drei Messprozeduren vorgeschlagen. Bei der ersten Methode soll der BCH über das Received Signal Strength 0, RSS0, gemessen und möglichst dekodiert werden. Bei der zweiten Methode soll für eine Dauer von zwei OFDM-Symbolen die Frequenz gemessen werden, ohne den BCH zu dekodieren. Bei der dritten Methode werden die beiden zuvor beschriebenen Methoden kombiniert. Bei einer Übergabeprozedur horcht die mobile Funkstation zuerst das Funkmedium nach BCH-Nachrichten ab. Empfängt die feste Funkstation ein BCH-Signal einer zentralen Instanz, dann meldet sie sich als mobile Funkstation bei dieser zentralen Instanz an. Andernfalls sendet die mobile Funkstation selber BCH-Signale aus und übernimmt die Rolle einer zentralen Instanz.

Im Projekt Cello (http://www.telecom.ece.ntua.gr/cello/) wurde vorgeschlagen, eine Übergabeprozedurentscheidung abhängig vom Ort einer mobilen Funkstation und den von dieser Station gemessenen Funkparametern zu treffen.

In dem als nächstliegender Stand der Technik angesehenen Dokument DE 199957642 A1 wird eine Sende-/Empfangsstation beschrieben, die in der Lage ist, Verbindungen mit verschiedenen Funkübertragungsystemen zu unterhalten. Verschlechtert sich die Übertragungsqualität einer Verbindung in einem verwendeten Funkübertragungssystem, erfolgt ein Wechsel der Verbindung in ein alternatives Funkübertragungssystem, das an einem netzseitig bekannten Standort der Sende-/Empfangsstation verfügbar ist. Bei dem Wechsel wird berücksichtigt, wie die lokale Netzauslastung der alternativen Funkübertragungssysteme ist, und es wird das Funkübertragungssystem mit der größten Übertragungsrate ausgewählt, sofern Verfügbarkeit des Funkübertragungssystems, zu erwartende Kosten für die Übertragung von Daten und die Geschwindigkeit der Sende-/Empfangsstation dies gestatten.

Der Erfindung liegt das Problem zugrunde, ein Verfahren zum Betrieb eines Funkkommunikationssystems sowie ein dafür eingerichtetes Funkkommunikationssystem anzugeben, in dem Übergabeprozeduren mit geringerem Aufwand durchführbar sind. Dieses Problem wird erfindungsgemäß gelöst durch ein Verfahren gemäß Anspruch 1, sowie ein Funkkommunikationssystem gemäß Anspruch 9. Weitere Ausgestaltungen der Erfindung gehen aus den Unteransprüchen hervor.

In dem Verfahren zum Betrieb eines Funkkommunikationssystems werden von im Funkkommunikationssystem befindlichen Funkstationen Funkparameter für eine Verbindung zwischen einer mobilen Funkstation und einem Zugangspunkt gemessen. Diese Funkparameter werden gemeinsam mit einer zugehörigen Ortsinformation der mobilen Funkstation gespeichert. Für eine vorgegebene mobile Funkstation, die eine Verbindung zu einem ersten Zugangspunkt unterhält und die sich an einem dem ersten Zugangspunkt bekannten Ort befindet , werden die für diesen Ort gespeicherten Funkparameter abgerufen. In dem Funkkommunikationssystem werden somit Messwerte, die von allen im Funkkommunikationssystem befindlichen Funkstationen oder Zugangspunkten gemessen wurden, gespeichert und so allen anderen Funkstationen oder Zugangspunkten zur Verfügung gestellt. Eine mobile Funkstation, für die gemessene Funkparameter für einen bestimmten Ort benötigt werden, kann somit auf die gespeicherten Werte zurückgreifen. Es ist daher nicht erforderlich, dass diese Funkstation die Messwerte selber ermittelt.

Vorzugsweise wird das Verfahren im Zusammenhang mit einer Übergabeprozedur eingesetzt. Für die vorgegebene mobile Funkstation wird auf Grund der abgerufenen Funkparameter ein Funkkanal zu einem zweiten Zugangspunkt abgeschätzt. Auf der Basis dieser Schätzung wird eine Entscheidung zur Durchführung einer Übergabeprozedur der Verbindung von dem ersten Zugangspunkt zu dem zweiten Zugangspunkt getroffen. Durch diese Vorgehensweise entfällt das Erfordernis, vor einer Übergabeprozedur Messungen bzw. Abhorchprozeduren durchzuführen, um die Funkbedingungen bezüglich anderer Zugangspunkte zu ermitteln. Dadurch wird einerseits das Funkkommunikationssystem entlastet, andererseits kann schnell über die Übergabeprozedur entschieden werden und die Übergabeprozedur durchgeführt werden, da keine zusätzlichen Messungen erforderlich sind.

Ist das Funkmedium großen zeitlichen Schwankungen ausgesetzt, so ist es vorteilhaft, zu jedem Funkparameter zusätzlich den Zeitpunkt der Messung zu speichern. Dadurch kann die Aktualität der Funkparameter überprüft werden.

Es liegt im Rahmen der Erfindung, zu jedem Funkparameter zusätzlich einen Geschwindigkeitsvektor der mobilen Funkstation zu speichern. Bei der Abschätzung des Funkkanals können dann die Geschwindigkeiten und Bewegungsrichtungen der mobilen Funkstationen berücksichtigt werden.

Das Verfahren ist sowohl für Übergabeprozeduren innerhalb eines Funkkommunikationssystems, in dem nur ein Zugriffsverfahren verwendet wird, als auch in Funkkommunikationssystemen, in denen verschiedene Zugriffsverfahren gleichzeitig eingesetzt werden, anwendbar. Da in einem Funkkommunikationssystem, in dem verschiedene Zugriffsverfahren eingesetzt werden, der Aufbau von gesonderten Signalisierungsverbindungen zur Ermittlung von Messwerten in Nachbarzellen besonders aufwändig ist, ist es besonders vorteilhaft, das erfindungsgemäße Verfahren auf diesen Fall anzuwenden, da dadurch die Einsparung besonders groß ist.

Bei Einsatz des Verfahrens in einem Funkkommunikationssystem mit Zugangspunkten, die unterschiedliche Zugriffsverfahren unterstützen, werden die Messergebnisse an eine Entscheidungseinheit übertragen, in der die Entscheidung zur Durchführung der Übergabeprozedur der Verbindung von dem ersten Zugangspunkt zu dem zweiten Zugangspunkt getroffen wird. Die Entscheidungseinheit kann an zentraler Stelle des Netzes, zum Beispiel in einem Vermittlungsknoten oder in einer Funknetzzugangssteuerung angeordnet sein. Die Entscheidungseinheit kann auch in der mobilen Funkstation vorgesehen werden. In diesem Fall müssen die für eine Übergabeprozedur maßgeblichen Messparameter über die Funkschnittstelle übertragen werden. Dabei können die Zugangspunkte mit eine TDMA-Zugriffsverfahren, einem FDMA-Zugriffsverfahren, einem OFDMA-Zugriffsverfahren, einem SDMA-Zugriffsverfahren und/oder einem CDMA-Zugriffsverfahren und/oder einer beliebigen Kombination der Zugriffsverfahren betrieben werden.

Vorzugsweise werden periodisch Messwerte, die dem Aufenthaltsort der vorgegebenen mobilen Funkstation zugeordnet sind, an die vorgegebene mobile Funkstation übertragen. Alternativ können diese Messwerte aber auch auf explizite Anfrage hin übermittelt werden. Mit Hilfe dieser Informationen kann die mobile Funkstation, falls die Verbindung zu dem zugeordneten Zugangspunkt abreisst, selbständig eine neue Verbindung zu einer anderen, auf Grund der Messwerte möglichen Funkstation aufbauen. Diese neue Verbindung wird quasi als Übergabeprozedur aufgebaut. Damit wird eine sogenannte harte Übergabe (Hard Handover) eingeleitet.

Ein Funkkommunikationssystem, das zum Ablauf des erfindungsgemäßen Verfahrens geeignet ist, weist mehrere Zugangspunkte auf, von denen Verbindungen zu mobilen Funkstationen aufgebaut werden können. Ferner sind Messeinrichtungen zur Messung von Funkparametern für eine Verbindung zwischen einer mobilen Funkstation und einem Zugangspunkt und zur Messung der Ortskoordinaten der mobilen Funkstation vorgesehen. Als derartige Messeinrichtungen sind in bekannten Funkkommunikationssystemen entsprechend GSM, GPRS, EDGE, UMTS die mobilen Funkstationen und die Zugangspunkte, wie Basisstationen und NodeB geeignet. Die Messung der Ortskoordinaten kann sowohl über die mobile Funkstation, als auch über den Zugangspunkt erfolgen. Des Weiteren können die genannten Funkparameter bzw. deren Attribute (Ort, Zeit, Geschwindigkeit, Richtung, etc.) durch Kopplung mit anderen Informationsquellen gewonnen werden.

Das Funkkommunikationssystem ist darüber hinaus mit einer Speichereinheit ausgerüstet, in der die gemessenen Funkparameter und die zugehörigen Ortskoordinaten gespeichert werden. Diese Speichereinheit kann sowohl zentral angeordnet sein, zum Beispiel in den Vermittlungsknoten, bei GSM, GPRS, EDGE oder UMTS in den Mobilvermittlungsstationen, in der Funknetzsteuerung oder in der Funkresourcensteuerung (Radio Resource Control). Darüber hinaus können die Messwerte in den Zugangspunkten oder den mobilen Funkstationen gespeichert werden. Dazu ist eine Übertragung der Messwerte über das Funkkommunikationssystem beziehungsweise ein Festnetz, mit dem das Funkkommunikationssystem über die Vermittlungsknoten verbunden ist, erforderlich. Die Übertragung der Messwerte kann insbesondere über ein IP-Netz erfolgen, mit dem die Vermittlungsknoten verbunden sind. Das Funkkommunikationssystem verfügt darüber hinaus über eine Entscheidungseinheit, in der die Entscheidungen zur Durchführung einer Übergabeprozedur einer Verbindung von einem ersten Zugangspunkt zu einem zweiten Zugangspunkt getroffen werden. Diese Entscheidungseinheit kann, ebenso wie die Speichereinheit, sowohl zentral in den Vermittlungsknoten, den Funkzugangssteuerungen oder den Funkresourcensteuerungen, als auch dezentral in den festen Funkstationen oder den mobilen Funkstationen vorgesehen sein.

Im Folgenden wird die Erfindung anhand von Ausführungsbeispielen, die in den Figuren dargestellt sind, näher erläutert.

Figur 1 zeigt ein Funkkommunikationssystem, das unterschiedliche Zugriffsverfahren unterstützt.

Figur 2 zeigt den Wechsel eines Teilnehmers von einer GSM-Zelle über eine Pikozelle und eine HIPERLAN/2-Zelle zu einer UMTS-Zelle.

Ein Funkkommunikationssystem umfasst erste Zugangspunkte BTS, die als Basisstationen gemäß GSM- beziehungsweise GPRS-Standard arbeiten. Mehrere der ersten Zugangspunkte BTS sind mit einer Basisstationssteuerung BSC verbunden. Die Basisstationssteuerungen BSC sind mit einer Mobilvermittlungsstation MSC verbunden, die über eine Gateway-Mobilvermittlungsstation GMSC mit einem IP-Netz IP verbunden ist. Jede der ersten Zugangspunkte BTS definiert eine Funkzelle Z₂i, i = 1, 2..., 5, in der unterschiedliche Teilnehmer gemäß dem im GSM-Standard vorgesehenen Zugriffsverfahren unterschieden werden. Zwischen dem ersten festen Zugangspunkt BTS1 und einer mobilen Funkstation MS1, zwischen dem ersten Zugangspunkt BTS2 und einer Mobilstation MS2, sowie zwischen dem ersten Zugangspunkt BTS3 und einer Mobilstation MS3 besteht jeweils eine Funkverbindung. Während dieser Verbindung werden periodisch Empfangsfeldstärken RSSI, Bitfehlerraten BER und Signal-zu-Störverhältnisse C/I gemessen. Darüber hinaus wird jeweils der Aufenthaltsort der jeweiligen mobilen Funkstation MSi, i=1,2,3 gemessen. Diese Funkparameter werden gemeinsam mit der zugehörigen Ortsinformation in einer ersten Speichereinheit SP₂ gespeichert. Die Speichereinheit SP₂ ist über die Mobilvermittlungsstation MSC und die Basisstationssteuerung BSC mit den ersten Zugangspunkten BTSi, i=1,2,3 verbunden.

Darüber hinaus umfasst das Funkkommunikationssystem zweite Zugangspunkte NodeBi, i=1 bis 6, die als Node B gemäß UMTS-Standard ausgebildet sind.. Die zweiten festen Zugangspunkte NodeBi sind mit Funknetzzugangssteuerungen RNC verbunden. Die Funknetzsteuerungen RNC sind über Mobilvermittlungsstellen MSC untereinander und über einen Paketdatenvermittlungsknoten (Serving GPRS Support Node) SGSN und einen Gateway-Paketdatenvermittlungsknoten GGSN mit dem IP-Netz IP verbunden. Die zweiten Zugangspunkte NodeBi definieren jeweils eine Zelle Z₃i, i=1 bis 6, in der die unterschiedlichen Teilnehmer entsprechend der im UMTS-Standard festgelegten Zugriffsverfahren unterschieden werden. Zwischen den zweiten Zugangspunkten NodeBi und mobilen Funkstationen MTi, i = 1 bis 3, ist jeweils eine Verbindung aufgebaut. Während dieser Funkverbindungen werden gemäß den im UMTS-Standard festgelegten Messprozeduren die Empfangsfeldstärke, die Bitfehlerrate und das Signal-zu-Störverhältnis C/I gemessen. Ferner werden die Ortskoordinaten des aktuellen Aufenthaltsorts der mobilen Funkstationen MTi, i = 1 bis 3, gemessen. Diese gemessenen Funkparameter sowie die Ortskoordinaten werden in einer zweiten Speichereinheit SP₃, die mit der Mobilvermittlungsstelle MSC verbunden ist, übertragen.

Ferner umfasst das Funkkommunikationssystem Zugangspunkte AP, die gemeinsam mit einer Zugangspunktsteuerung APC Zellen Z_{H}i, i = 1,2,3 entsprechend dem HIPERLAN/2-Standard bilden. Mit der Zugangspunktsteuerung APC ist eine dritte Speichereinheit Sp_{H} verbunden, in der Ortskoordinaten und Messwerte für mobile Funkstationen, die in Verbindung mit einem Zugangspunkt AP stehen, gespeichert werden. Derartige Messwerte werden durch im HIPERLAN/2-Standard festgelegte Messprozeduren gewonnen.

Das Funkkommunikationssystem umfasst darüber hinaus eine Entscheidungseinheiten E₂, E₃, E_{H} ,die über mit den Mobilstationen MSC für die entsprechend GSM- und UMTS-Standard eingerichteten ersten und zweiten Zugangspunkte BTSi bzw. NodeBi bzw. mit der Zugangspunktsteuerung APC verbunden sind und ü-ber diese mit den jeweiligen Zugangspunkten BTS, NodeB, CC in Verbindung stehen. In den Entscheidungseinheiten E₂, E₃, E_{H} wird die Entscheidung getroffen, ob eine Übergabeprozedur einer Verbindung von einem Zugangspunkt zu einem anderen Zugangspunkt durchgeführt werden soll. Dazu greifen die Entscheidungseinheiten E₂, E₃, E_{H} auf die in den Speichereinheiten Sp₂, Sp₃, Sp_{H} für die entsprechenden Orte gespeicherten Funkparameter zurück. Die Entscheidungseinheiten E₂, E₃, E_{H}stehen untereinander über das IP-Netz IP miteinander in Verbindung. Alternativ können die Entscheidungseinheiten E₂, E₃, E_{H} und die Speichereinheiten Sp₂, Sp₃, Sp_{H} jeweils als zentralen Einheiten vorgesehen sind, die über das IP-Netz mit allen Zugangspunkten BTS, NodeB, CC in Verbindung stehen

Bewegt sich beispielsweise die mobile Funkstation MS1 aus der Zelle Z₂1 in die Zelle Z₂4, so entscheidet die erste Entscheidungseinheit E₂ anhand der gemessenen Funkparameter für den Aufenthaltsort der mobilen Funkstation MS1 in der Zelle Z₂₂, ob und wann eine Übergabeprozedur eingeleitet wird. Ändern sich dagegen die Anforderungen für die Verbindung der mobilen Funkstation MS3 im Hinblick auf die Datenrate, so dass eine Funkverbindung zu einer zweiten festen Funkstation NodeB zweckmäßig ist, so überprüfen die erste Entscheidungseinheit E₂ und die zweite Entscheidungseinheit E₃ anhand der in der zweiten Speichereinheit SP₃ gespeicherten Funkparameter, welche der Zellen Z₃i für die Übergabeprozedur in Frage kommt. Da sich die Mobilstation MS3 sowohl im Gebiet der Zelle Z₂3 als auch im Gebiet der Zelle Z₃4 aufhält, wird eine Übergabeprozedur zu dem zweiten Zugangspunkt NodeB4 durchgeführt.

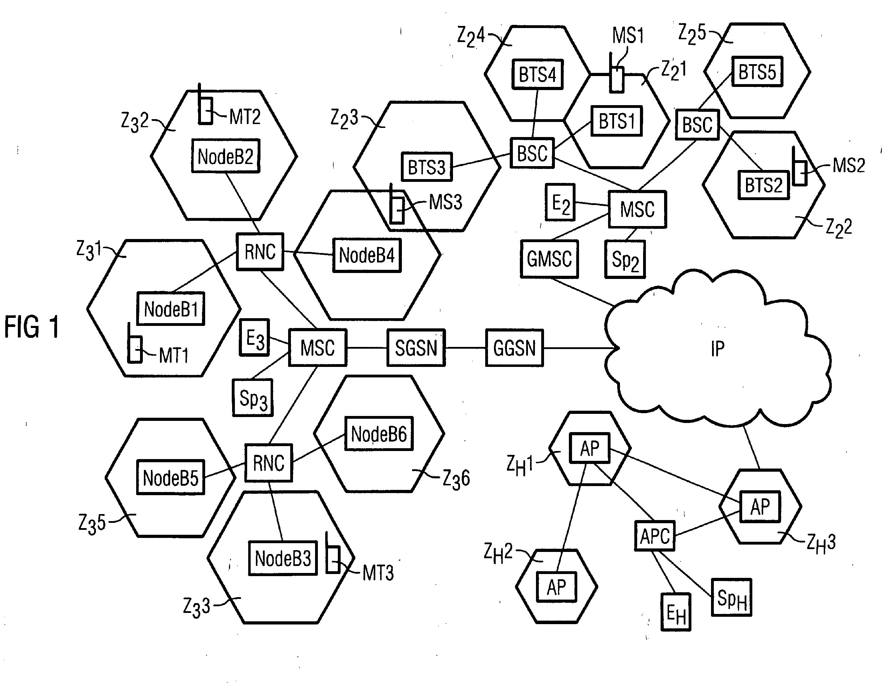

Alternativ zu dem in Figur 1 dargestellten Ausführungsbeispiel können die Funkparameter und die zugehörigen Ortskoordinaten an unterschiedlichen Orten des Funkkommunikationssystems im Sinne einer verteilten Datenbank gespeichert sein. Entsprechend können die Entscheidungen für die Übergabeprozedur dezentral beispielsweise in den mobilen Funkstationen getroffen werden. In diesem Fall müssen die für die Übergabeentscheidung jeweils erforderlichen Funkparameter an die jeweilige Entscheidungseinheit übertragen werden.

Die gespeicherten Funkparameter enthalten ebenfalls die Information, welches Zugriffsverfahren beziehungsweise, welche Art der Zelle jeweils verfügbar ist.

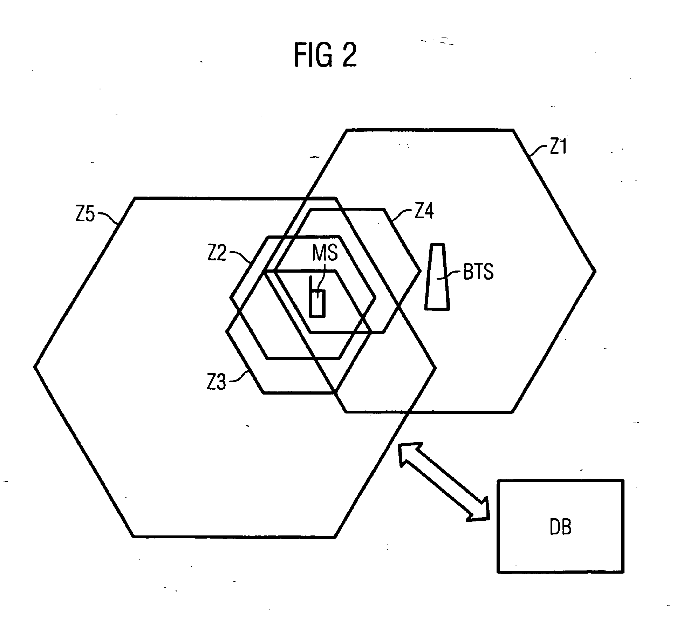

Beim Aufbau einer Verbindung zwischen einer mobilen Funkstation MS und einem Funkkommunikationssystem ist zunächst nicht bekannt, welche Funkschnittstellen zur Verfügung stehen. Die mobile Funkstation MS baut beispielsweise zunächst eine Verbindung zu einer Basisstation BTS gemäß GSM-Standard auf (siehe Figur 2). Die Basisstation BTS versorgt eine Zelle Z1. Über eine Abfrage in einer Datenbank DB, in der in dem Funkkommunikationssystem die Funkparameter und die zugehörigen Ortskoordinaten gespeichert sind, stellt sich heraus, dass sich die Mobilstation zusätzlich in einer Zelle Z2 eines IEEE802.11 WLAN, in einer Zelle Z3 eines HIPERLAN/2 WLAN, sowie einer Zelle Z4 eines Bluetooth PAN und einer Zelle Z5 gemäß UMTS-Standard befindet. Auf Grund der Anforderungen an die Datenübertragung der mobilen Funkstation MS wird eine Übergabeprozedur zu der Zelle Z3 des HIPERLAN/2 WLAN durchgeführt. Da sich die Geschwindigkeit der mobilen Funkstation MS ändert, und sich die mobile Funkstation MS mit zunehmender Geschwindigkeit der Zellgrenze der HIPERLAN/2 WLAN Zelle Z3 nähert, wird seitens des Funkkommunikationssystems die Entscheidung getroffen, dass die Verbindung der mobilen Funkstation MS durch Übergabeprozedur von der Zelle Z3 auf die UMTS-Zelle Z5 übergeben wird. Die UMTS-Zelle Z5 ist größer als die Zelle Z3, so dass die Häufigkeit der Übergabeprozeduren bei erhöhter Geschwindigkeit dadurch reduziert wird.

Die Entscheidung für die beschriebenen Übergabeprozeduren kann sowohl in einer zentralen Entscheidungseinheit als auch dezentral z.B. in der mobilen Funkstation MS getroffen werden. Entsprechend können die Funkparameter in einer zentralen Datenbank oder in einer verteilten Datenbank gespeichert sein.

## Patentansprüche

1. Verfahren zum Betrieb eines Funkkommunikationssystems,
- bei dem von im Funkkommunikationssystem befindlichen Funkstationen(z.B. BTS/MS; NodeB/MT) Funkparameter für Verbindungen zwischen mobilen Funkstationen (z.B. MS; MT) und Zugangspunkten (z.B. BTS; NodeB), sowie Ortskoordinaten der mobilen Funkstationen (z.B. MS; MT) gemessen werden,
- und bei dem eine vorgegebene mobile Funkstation (z.B. MS3) eine Verbindung zu einem ersten Zugangspunkt (z.B. BTS3; NodeB4) unterhält und sich an einem dem ersten Zugangspunkt (z.B. BTS3; NodeB4) bekannten Ort befindet,
**dadurch gekennzeichnet,**
- **dass** die von den Funkstationen (z.B. BTS/MS; NodeB/MT) gemessenen Funkparameter und die zugehörigen Ortskoordinaten gemeinsam im Sinne einer Datenbank (DB) gespeichert und allen anderen Funkstationen (z.B. MS; MT) oder Zugangspunkten (z.B. BTS; NodeB) zur Verfügung gestellt werden, so dass für einen Ort gemessene Funkparameter für an dem Ort verfügbare Zugangspunkte (z.B. BTS3; NodeB4) abrufbar sind,
- und **dass** für die vorgegebene mobile Funkstation (z.B. MS3) die im Sinne einer Datenbank (DB) gespeicherten Funkparameter, für wenigstens zwei an dem bekannten Ort verfügbare Zugangspunkte (z.B. BTS3; Node B4), abgerufen werden.

2. Verfahren nach Anspruch 1,
- bei dem eine Entscheidungseinheit (z.B. E₂) die Funkparameter für die vorgegebene mobile Funkstation (z.B. MS3) abruft,
- bei dem in der Entscheidungseinheit (z.B. E₂) für die vorgegebene mobile Funkstation (z.B. MS3) auf Grund der abgerufenen Funkparameter ein Funkkanal zu einem zweiten Zugangspunkt (z.B. NodeB4) abgeschätzt wird und eine Entscheidung zur Durchführung einer Übergabeprozedur der Verbindung von dem ersten Zugangspunkt (z.B. BTS3) zu dem zweiten Zugangspunkt (z.B. NodeB4) getroffen wird.

3. Verfahren nach Anspruch 1 oder 2,
- bei dem zu jedem Funkparameter zusätzlich der Zeitpunkt der Messung gespeichert wird.

4. Verfahren nach Anspruch 1 oder 2,
- bei dem bei der Abschätzung des Funkkanals die Zeitpunkte der Messungen berücksichtigt werden.

5. Verfahren nach einem der Ansprüche 2 bis 4,
- bei dem zu jedem Funkparameter der Geschwindigkeitsvektor der mobilen Funkstation (z.B. MS; MT) gespeichert wird,
- bei dem bei der Abschätzung des Funkkanals die Geschwindigkeitsvektoren der mobilen Funkstationen (z.B. MS; MT) berücksichtigt werden.

6. Verfahren nach einem der Ansprüche 2 bis 5,
- bei dem das Funkkommunikationssystem Zugangspunkte (z.B. BTS; NodeB), die nach unterschiedlichen Zugriffsverfahren arbeiten, umfasst,
- bei dem sich der erste Zugangspunkt (z.B. BTS) und der zweite Zugangspunkt (z.B. NodeB) bezüglich des von ihnen verwendeten Zugriffsverfahren unterscheiden,
- bei dem die gemessenen Funkparameter an eine Entscheidungseinheit (z.B. E₂) übertragen werden, in der die Entscheidung zur Durchführung der Übergabeprozedur der Verbindung von dem ersten Zugangspunkt (z.B. BTS) zum zweiten Zugangspunkt (z.B. NodeB) getroffen wird.

7. Verfahren nach Anspruch 6,
- bei dem das Funkkommunikationssystem Zugangspunkte (z.B. BTS; NodeB; AP), die mit einem TDMA-Zugriffsverfahren, einem FDMA-Zugriffsverfahren, einem OFDMA-Zugriffsverfahren, einem SDMA-Zugriffsverfahren und/oder einem CDMA-Zugriffsverfahren und/oder einer beliebigen Kombination dieser Zugriffsverfahrenbetrieben werden, aufweist.

8. Verfahren nach Anspruch 6 oder 7,
- bei dem periodisch oder auf Anfrage Messwerte, die dem Aufenthaltsort der vorgegebenen mobilen Funkstation (z.B. MS3) zugeordnet sind, an die vorgegebene mobile Funkstation (z.B. MS3) übertragen werden.

9. Funkkommunikationssystem
- mit mehreren Zugangspunkten (z.B. BTS; NodeB), von denen Verbindungen zu mobilen Funkstationen (z.B. MS; MT) aufgebaut werden können,
- mit Messeinrichtungen zur Messung von Funkparametern für Verbindungen zwischen mobilen Funkstationen (z.B. MS; MT) und Zugangspunkten (z.B. BTS; NodeB) und zur Messung der Ortskoordinaten der mobilen Funkstationen (z.B. MS; MT),
- mit einer vorgegebenen mobilen Funkstation (z.B. MS3), die eine Verbindung zu einem ersten Zugangspunkt (z.B. BTS3) unterhält und sich an einem dem ersten Zugangspunkt (z.B. BTS3) bekannten Ort befindet,
**gekennzeichnet durch**
- eine Speichereinheit (SP), in der die von den Funkstationen (z.B. BTS/MS; NodeB/MT) gemessenen Funkparameter und die zugehörigen Ortskoordinaten gemeinsam im Sinne einer Datenbank (DB) gespeichert und allen anderen Funkstationen (z.B. MS; MT) oder Zugangspunkten (z.B. BTS; NodeB) zur Verfügung gestellt werden, so dass für einen Ort gemessene Funkparameter für an dem Ort verfügbare Zugangspunkte (z.B. BTS3; NodeB4) abrufbar sind,
- und eine Entscheidungseinheit (z.B. E₂) zum Abrufen für die vorgegebene mobile Funkstation (z.B. MS3) von im Sinne einer Datenbank (DB) gespeicherten Funkparametern für wenigstens zwei an dem Ort verfügbare Zugangspunkte (z.B. BTS3; NodeB4).

10. Funkkommunikationssystem nach Anspruch 9,
- bei dem Zugangspunkte (z.B. BTS; NodeB4; AP) vorgesehen sind, die unterschiedliche Zugriffsverfahren unterstützen.

## Claims

1. Method for operating a radio communication system,
- wherein radio parameters for connections between mobile radio stations (e.g. MS; MT) and access points (e.g. BTS; NodeB) as well as location coordinates of the mobile radio stations (e.g. MS; MT) are measured by radio stations (e.g. BTS/MS; NodeB/MT) that are located in the radio communication system,
- and wherein a predefined mobile radio station (e.g. MS3) maintains a connection to a first access point (e.g. BTS3; NodeB4) and is located at a location known to the first access point (e.g. BTS3; NodeB4),
**characterised in that**
- the radio parameters measured by the radio stations (e.g. BTS/MS; NodeB/MT) and the associated location coordinates are stored jointly in the manner of a database (DB) and made available to all the other radio stations (e.g. MS; MT) or access points (e.g. BTS; NodeB) such that radio parameters measured for a location are retrievable for access points (e.g. BTS3; NodeB4) that are available at the location,
- and the radio parameters stored in the manner of a database (DB) for at least two access points (e.g. BTS3; NodeB4) that are available at the known location are retrieved on behalf of the predefined mobile radio station (e.g. MS3).

2. Method according to claim 1,
- wherein a decision unit (e.g. E₂) retrieves the radio parameters on behalf of the predefined mobile radio station (e.g. MS3),
- wherein in the decision unit (e.g. E₂) a radio channel to a second access point (e.g. NodeB4) is estimated on behalf of the predefined mobile radio station (e.g. MS3) on the basis of the retrieved radio parameters and a decision is taken to perform a handover procedure for handing over the connection from the first access point (e.g. BTS3) to the second access point (e.g. NodeB4).

3. Method according to claim 1 or 2,
- wherein the time of the measurement is stored in addition for each radio parameter.

4. Method according to claim 1 or 2,
- wherein the times of the measurements are taken into account in the estimation of the radio channel.

5. Method according to one of claims 2 to 4,
- wherein the speed vector of the mobile radio station (e.g. MS; MT) is stored for each radio parameter,
- wherein the speed vectors of the mobile radio stations (e.g. MS; MT) are taken into account in the estimation of the radio channel.

6. Method according to one of claims 2 to 5,
- wherein the radio communication system comprises access points (e.g. BTS; NodeB) that operate in accordance with different access methods,
- wherein the first access point (e.g. BTS) and the second access point (e.g. NodeB) are different in terms of the access method used by them,
- wherein the measured radio parameters are transmitted to a decision unit (e.g. E₂) in which the decision is taken to perform the handover procedure for handing over the connection from the first access point (e.g. BTS) to the second access point (e.g. NodeB).

7. Method according to claim 6,
- wherein the radio communication system has access points (e.g. BTS; NodeB; AP) that are operated with a TDMA access method, an FDMA access method, an OFDMA access method, an SDMA access method and/or a CDMA access method and/or an arbitrary combination of said access methods.

8. Method according to claim 6 or 7,
- wherein measured values that are associated with the location of the predefined mobile radio station (e.g. MS3) are transmitted periodically or on request to the predefined mobile radio station (e.g. MS3).

9. Radio communication system
- having a plurality of access points (e.g. BTS; NodeB) from which connections to mobile radio stations (e.g. MS; MT) can be set up,
- having measurement equipment for measuring radio parameters for connections between mobile radio stations (e.g. MS; MT) and access points (e.g. BTS; NodeB) and for measuring the location coordinates of the mobile radio stations (e.g. MS; MT),
- having a predefined mobile radio station (e.g. MS3) that maintains a connection to a first access point (e.g. BTS3) and is located at a location known to the first access point (e.g. BTS3),
**characterised by**
- a storage unit (SP) in which the radio parameters measured by the radio stations (e.g. BTS/MS; NodeB/MT) and the associated location coordinates are stored jointly in the manner of a database (DB) and are made available to all the other radio stations (e.g. MS; MT) or access points (e.g. BTS; NodeB) such that radio parameters measured for a location are retrievable for access points (e.g. BTS3; NodeB4) that are available at the location,
- and a decision unit (e.g. E₂) for retrieving on behalf of the predefined mobile radio station (e.g. MS3) radio parameters stored in the manner of a database (DB) for at least two access points (e.g. BTS3; NodeB4) that are available at the location.

10. Radio communication system according to claim 9,
- wherein access points (e.g. BTS; NodeB4; AP) are provided which support different access methods.

## Revendications

1. Procédé pour exploiter un système de radiocommunication, dans lequel
- des stations radio (par exemple BTS/MS ; NodeB/MT) situées dans le système de radiocommunication mesurent des paramètres radio pour des liaisons entre des stations radio mobiles (par exemple MS ; MT) et des points d'accès (par exemple, BTS ; NodeB) ainsi que des coordonnées locales des stations radio mobiles (par exemple, MS ; MT) et
- une station radio mobile donnée (par exemple, MS3) entretient une liaison avec un premier point d'accès (par exemple, BTS3 ; NodeB4) et se trouve à un endroit connu du premier point d'accès (par exemple, BTS3 ; NodeB4),
**caractérisé en ce que**
- les paramètres radio mesurés par les stations radio (par exemple, BTS/MS ; NodeB/MT) et les coordonnées locales associées sont stockés ensemble au sens d'une base de données (DB) et mis à la disposition de tous les autres stations radio (par exemple, MS ; MT) ou points d'accès (par exemple, BTS ; NodeB) de sorte qu'il est possible d'extraire des paramètres radio mesurés pour un endroit pour des points d'accès disponibles à cet endroit (par exemple, BTS3 ; NodeB4) et
- sont extraits, pour la station radio mobile donnée (par exemple, MS3), les paramètres radio stockés au sens d'une base de données (DB) pour au moins deux points d'accès (par exemple, BTS3 ; NodeB4) disponibles à l'endroit connu.

2. Procédé selon la revendication 1, dans lequel
- une unité de décision (par exemple, E₂) extrait les paramètres radio pour la station radio mobile donnée (par exemple, MS3) ;
- un canal radio vers un deuxième point d'accès (par exemple, NodeB4) est estimé dans l'unité de décision (par exemple, E₂) pour la station radio mobile donnée (par exemple, MS3) sur la base des paramètres radio extraits et une décision est prise d'exécuter une procédure de transfert de la liaison du premier point d'accès (par exemple, BTS3) au deuxième point d'accès (par exemple, NodeB4).

3. Procédé selon la revendication 1 ou 2, dans lequel l'instant de la mesure est stocké additionnellement pour chaque paramètre radio.

4. Procédé selon la revendication 1 ou 2, dans lequel les instants des mesures sont pris en compte lors de l'estimation du canal radio.

5. Procédé selon l'une des revendications 2 à 4, dans lequel
- le vecteur de vitesse de la station radio mobile (par exemple, MS ; MT) est stocké pour chaque paramètre radio ;
- les vecteurs de vitesse des stations radio mobiles (par exemple MS ; MT) sont pris en compte lors de l'estimation du canal radio.

6. Procédé selon l'une des revendications 2 à 5, dans lequel
- le système de radiocommunication comprend des points d'accès (par exemple, BTS ; NodeB) qui fonctionnent selon des procédés d'accès différents ;
- le premier point d'accès (par exemple, BTS) et le deuxième point d'accès (par exemple, NodeB) diffèrent au regard du procédé d'accès qu'ils utilisent ;
- les paramètres radio mesurés sont transmis à une unité de décision (par exemple, E₂) dans laquelle est prise la décision d'exécuter la procédure de transfert de la liaison du premier point d'accès (par exemple, BTS) au deuxième point d'accès (par exemple, NodeB).

7. Procédé selon la revendication 6, dans lequel le système de radiocommunication comporte des points d'accès (par exemple, BTS ; NodeB ; AP) qui sont exploités selon un procédé d'accès TDMA, un procédé d'accès FDMA, un procédé d'accès OFDMA, un procédé d'accès SDMA et/ou un procédé d'accès CDMA et/ou une combinaison quelconque de ces procédés d'accès.

8. Procédé selon la revendication 6 ou 7, dans lequel des valeurs de mesure qui sont associées à la localisation de la station radio mobile donnée (par exemple, MS3) sont transmises périodiquement ou sur demande à la station radio mobile donnée (par exemple, MS3).

9. Système de radiocommunication, comportant
- plusieurs points d'accès (par exemple, BTS ;
NodeB) par lesquels peuvent être établies des liaisons avec des stations radio mobiles (par exemple, MS ; MT) ;
- des dispositifs de mesure pour mesurer des paramètres radio pour des liaisons entre des stations radio mobiles (par exemple, MS ; MT) et des points d'accès (par exemple, BTS ; NodeB) et pour mesurer les coordonnées locales des stations radio mobiles (par exemple, MS ; MT) ;
- une station radio mobile donnée (par exemple, MS3) qui entretient une liaison avec un premier point d'accès (par exemple, BTS3) et qui se trouve à un endroit connu du premier point d'accès (par exemple, BTS3) ;
**caractérisé par**
- une unité de mémoire (SP) dans laquelle les paramètres radio mesurés par les stations radio (par exemple, BTS/MS ; NodeB/MT) et les coordonnées locales associées sont stockés ensemble au sens d'une base de données (DB) et mis à la disposition de tous les autres stations radio (par exemple, MS ; MT) ou points d'accès (par exemple, BTS ; NodeB) de sorte qu'il est possible d'extraire des paramètres radio mesurés pour un endroit pour des points d'accès disponibles à cet endroit (par exemple, BTS3 ; NodeB4) et
- une unité de décision (par exemple, E₂) pour extraire, pour la station radio mobile donnée (par exemple, MS3), des paramètres radio stockés au sens d'une base de données (DB) pour au moins deux points d'accès (par exemple, BTS3 ; NodeB4) disponibles à l'endroit.

10. Système de radiocommunication selon la revendication 9, dans lequel sont prévus des points d'accès (par exemple, BTS ; NodeB4 ; AP) qui supportent différents procédés d'accès.
